(19) Europäisches Patentamt
European Patent Office
Office européen des brevets

(11) **EP 3 537 365 A1**

(12) **EUROPEAN PATENT APPLICATION**
published in accordance with Art. 153(4) EPC

(43) Date of publication:
**11.09.2019 Bulletin 2019/37**

(51) Int Cl.:
***G06Q 30/02*** (2012.01)    ***G06F 17/27*** (2006.01)

(21) Application number: **17884770.3**

(22) Date of filing: **28.09.2017**

(86) International application number:
**PCT/CN2017/104079**

(87) International publication number:
**WO 2018/113370 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.12.2016 CN 201611194189**

(71) Applicant: **Huawei Technologies Co., Ltd.**
**Longgang District**
**Shenzhen, Guangdong 518129 (CN)**

(72) Inventors:
• **ZHANG, Haibin**
  **Shenzhen, Guangdong 518129 (CN)**
• **YANG, Yiling**
  **Shenzhen, Guangdong 518129 (CN)**
• **ZHANG, Xu**
  **Shenzhen, Guangdong 518129 (CN)**

(74) Representative: **Maiwald Patent- und Rechtsanwaltsgesellschaft mbH**
**Elisenhof**
**Elisenstraße 3**
**80335 München (DE)**

(54) **METHOD, DEVICE, AND SYSTEM FOR INCREASING USERS**

(57)    A user increasing method is disclosed, including: obtaining behavior data information of a plurality of users, where the behavior data information includes related time and space information of a user behavior, or related time of a user behavior, or space information of a user behavior; performing gridding processing on the behavior data information, to convert the behavior data information to mapped behavior data information; extracting behavior patterns from mapped behavior data information, to obtain a behavior pattern set of a plurality of seed users; performing pattern matching between behavior data of each non-seed user and the behavior pattern set, to obtain a similarity between each non-seed user and the plurality of seed users; and determining, based on the similarity, whether at least one of the plurality of non-seed users is a potential user.

```
Obtain behavior data information of a plurality of users                                    ─S102

Perform gridding processing on the behavior data information of the
plurality of users                                                                         ─S104

Extract behavior patterns                                                                   ─S106

Perform pattern matching between behavior data of a non-seed user and
a behavior pattern set, to obtain a similarity between each non-seed user
and a plurality of seed users                                                              ─S108

Determine, based on the similarity, whether at least one of the plurality
of non-seed users is a potential user                                                      ─S110
```

FIG. 4

## Description

This application claims priority to Chinese Patent Application No. 201611194189.8, filed with the Chinese Patent Office on December 21, 2016 and entitled "USER INCREASING METHOD, APPARATUS, AND SYSTEM", which is incorporated herein by reference in its entirety.

## TECHNICAL FIELD

The present invention relates to the communications field, and in particular, to a user increasing method, apparatus, and system.

## BACKGROUND

To attract more users, a telecommunications operator constantly launches new services. How to precisely identify users requiring the new services and further to increase a quantity of potential users becomes one of key factors of successfully launching the new services. Generally, the telecommunications operator can obtain a list of users who have subscribed to a telecommunication service (such as a ring back tone service), and the users are referred to as "seed users". Based on the "seed users", the telecommunications operator expects to use a method to increase users, so as to prompt the new service to more potential users of non-seed users.

For example, a telecommunications operator A develops a new discount "Campus Package" for holiday interns based on market survey. The "Campus Package" includes services such as free of answering and traffic-based charging reduction service from 8 p.m. to 6 a.m. in next morning. The telecommunications operator A obtains a list of users (seed users) that actively subscribe to the "Campus Package", and needs to analyze the seed users who have subscribed to the "Campus Package" service, to search for users having a similar user attribute from a large group of "non-seed users" that have never subscribed to this package, and deem these users as potential users, so as to increase a promotion success rate.

One of existing common solutions is to increase users according to a rule. In the solution, human experience is used to determine a standard of determining a potential user, and a user who meets the standard is a potential user. In the solution, a large amount of prior knowledge is required to determine the standard. However, in many actual application scenarios, prior knowledge is hard to obtain. In addition, in the solution, service experts are usually required in formulating the standard, and a user increasing quantity obtained based on the formulated standard is excessively large or excessively small, hard to precisely determine potential users.

## SUMMARY

Embodiments of the present invention provide a user increasing method, apparatus, and system, so as to resolve a problem in an existing solution that it is hard to accurately determine potential users.

To resolve the foregoing technical problems, the following technical solutions are used in the embodiments of the present invention.

According to a first aspect, a user increasing method is provided, including:

obtaining behavior data information of a plurality of users, where the behavior data information includes related time and space information of a user behavior, or related time of a user behavior, or space information of a user behavior;
performing gridding processing on the behavior data information of the plurality of users, to convert the behavior data information to mapped behavior data information;
extracting behavior patterns from mapped behavior data information of a plurality of seed users among the plurality of users, to obtain a behavior pattern set of the plurality of seed users;
performing pattern matching between behavior data of each non-seed user and the behavior pattern set, to obtain a similarity between each non-seed user and the plurality of seed users; and

determining, based on the similarity, whether at least one of the plurality of non-seed users is a potential user.

The plurality of users include seed users and non-seed users in a whole network. The seed users are users who have subscribed to a telecommunication service (such as a ring back tone service), and the non-seed users are users who have not subscribed to the telecommunication service yet.

The gridding processing is specifically: segmenting a time dimension along a time axis, to map the user behavior data onto a corresponding time segment; and dividing a two-dimensional location space into grid blocks based on longitude and latitude, to map the user behavior data onto a corresponding grid; or segmenting a time dimension along a time axis, to map the user behavior data onto a corresponding time segment; or dividing a two-dimensional location space into grid blocks based on longitude and latitude, to map the user behavior data onto a corresponding grid. Continuous time may be discretized by segmenting the time axis. For example, if 8:00-9:00 is considered as a time segment, a behavior occurs at 8:04 and a behavior occurs at 8:08 can be classified into the same time segment, to search for a common rule. This helps extract the behavior pattern set of the seed users.

The behavior pattern set includes a plurality of behavior patterns, each behavior pattern represents a behavior characteristic of the seed user, and the behavior characteristic is a behavior habit of the seed user, to be specific, when and where a behavior of the seed user occurs, or when a behavior of the seed user occurs, or where a behavior of the seed user occurs.

The step of performing pattern matching between behavior data of each non-seed user and the behavior pattern set is specifically:

performing matching between the behavior data of each non-seed user and the behavior pattern set of the seed users; and if one non-seed user matches a plurality of behavior patterns, obtaining a matching result through fusion of weights, and finally obtaining a similarity score between each non-seed user and the behavior pattern set of the seed users. A higher score indicates a higher similarity. A high similarity indicates that a behavior pattern of the non-seed user is similar to the seed users, and a low similarity indicates that the behavior pattern of the non-seed user is different from the seed users.

A weight coefficient of a fused weight can be determined in a manner of dividing a frequency by a total quantity of the seed users.

According to a second aspect of the present invention, a data mining and analysis device is provided, including:

a receiving unit, configured to obtain behavior data information of a plurality of users, where the behavior data information includes related time and space information of a user behavior, or related time of a user behavior, or space information of a user behavior;

a mapping unit, configured to perform gridding processing on the behavior data information of the plurality of users, to convert the behavior data information to mapped behavior data information;

a pattern extracting unit, configured to extract behavior patterns from mapped behavior data information of a plurality of seed users among the plurality of users, to obtain a behavior pattern set of the plurality of seed users;

a pattern matching unit, configured to perform pattern matching between behavior data of each non-seed user and the behavior pattern set, to obtain a similarity between each non-seed user and the plurality of seed users;

a determining unit, configured to determine, based on the similarity, whether at least one of the plurality of non-seed users is a potential user; and

a sending unit, configured to send information of the potential user to a marketing platform.

According to a third aspect of the present invention, a user increasing system is provided, including:

a storage device, configured to store behavior data information of a plurality of users, where the behavior data information includes related time and space information of a user behavior, or related time of a user behavior, or space information of a user behavior;

the data mining and analysis device according to the second aspect; and

a marketing platform, configured to launch a promotional service to potential users based on a determining result of the data mining and analysis device.

According to still another aspect of this application, a computer program product is provided, where when being executed, the computer program product is used to perform the foregoing method in the foregoing aspect.

According to still another aspect of this application, a computer readable storage medium is provided, where the computer readable storage medium stores an instruction, and the instruction is used to perform the foregoing method in the foregoing aspect.

The embodiments of the present invention provide the user increasing method, apparatus, and system. Gridding processing is performed on the time/space behavior data of the seed users to obtain the behavior pattern set of the seed users. Then, pattern matching is performed between behavior pattern data of the plurality of non-seed users and the behavior pattern set of the seed users, to obtain similarities between the non-seed users and the seed users. Whether the non-seed users are potential users is determined based on the similarities. In the solution, user attributes of the seed users are analyzed to obtain a common rule, so as to obtain the behavior pattern set. Then, matching is performed between user attributes of the non-seed users and these patterns, scores are given based on matching results, and whether there is a potential user is determined. In this way, potential users are identified more accurately.

## DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.

FIG. 1 is a schematic diagram of composition of a user increasing system according to an embodiment of the present invention;

FIG. 2 is a structural block diagram of a data mining and analysis device according to an embodiment of the present invention;

FIG. 3 is a schematic diagram of space gridding processing according to an embodiment of the present invention; and

FIG. 4 is a schematic flowchart of a user increasing method according to an embodiment of the present invention.

## DESCRIPTION OF EMBODIMENTS

The following clearly and completely describes the technical solutions in the embodiments of the present invention with reference to the accompanying drawings in the embodiments of the present invention.

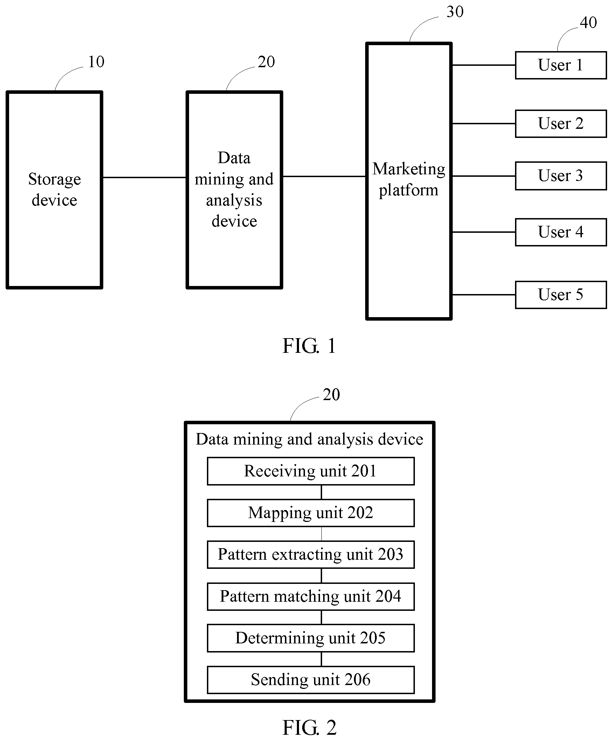

FIG. 1 shows a user increasing system according to an embodiment of the present invention, including: a storage device 10, a data mining and analysis device 20, a marketing platform 30, and a plurality of users 40. The storage device 10 may be a device that can store user behavior data, such as a storage server, an optical disk, or a hard disk. A communications base station summarizes location information (longitude and dimension) captured from a user mobile phone and an APP usage record of the user, to obtain the user behavior data, and then stores the obtained user behavior data to a storage medium of the storage device 10 in a form of a basis metadata table. Content of the basis metadata table is shown in the following Table 1.

**Table 1 Basis metadata table**

| User ID | Time | | Location (longitude + dimension) | | APP usage |
|---------|------|------|---------|---------|-----------|
| ID1 | 15-09-2016 | 08:00:00 | 120.2001 | 30.0601 | Taobao |
| ID1 | 15-09-2016 | 10:10:00 | 120.2001 | 30.0601 | Yahoo |
| ID1 | 15-09-2016 | 11:20:00 | 120.2001 | 30.0601 | Baidu |
| ID1 | 15-09-2016 | 15:20:00 | 120.2001 | 30.0601 | Sina |
| ID2 | 15-09-2016 | 08:05:00 | 120.2001 | 30.0601 | Taobao |
| ID2 | 15-09-2016 | 09:10:00 | 120.2001 | 30.0601 | Taobao |
| ID2 | 15-09-2016 | 10:05:00 | 120.2001 | 30.0601 | Yahoo |
| ID2 | 15-09-2016 | 11:15:00 | 120.2001 | 30.0601 | Baidu |
| ID3 | 15-09-2016 | 08:40:00 | 120.2002 | 30.0602 | Taobao |
| ... | ... | ... | ... | ... | ... |
| IDn | 15-09-2016 | 23:45:00 | 120.2002 | 30.0602 | Tmall |

A first record in Table 1 represents that a user 1 uses Taobao at 8:00:00 on September 15, 2016 at a location of longitude 120.2001 and dimension 30.0602.

The data mining and analysis device 20 is configured to mine and analyze behavior data of a plurality of users stored in the storage device 10, and select some users from the plurality of users as potential users, so that the marketing platform 30 can promote a new service for the potential users.

As shown in FIG. 2, the data mining and analysis device 20 in this embodiment of the present invention further includes: a receiving unit 201, a mapping unit 202, a pattern extracting unit 203, a pattern matching unit 204, a determining unit 205, and a sending unit 206.

The receiving unit 201 is configured to obtain behavior data information of the plurality of users from the storage device 10, where the behavior data information includes related time and space information of a user behavior, or related time of a user behavior, or space information of a user behavior.

The mapping unit 202 is configured to perform gridding processing on the behavior data information of the plurality of users obtained by the receiving unit, to convert the behavior data information to mapped behavior data information.

Time gridding processing is specifically: segmenting a time dimension along a time axis. For example, a specific time point such as beginning of each month may be used as an origin of the time axis, one hour may be used as one time segment (or referred to as a slot slot), one day is divided into 24 time segments, and any time point between 8:00 and 9:00 is discretized as a digit 8. The time segment may also be segmented in other manners according to needs, for example, 10 minutes or 30 minutes is used as a time segment. If a user browses a plurality of websites in one time segment, top 3 most frequently visited websites may be used as representatives.

Data obtained after the time gridding processing on the behavior data in the basis metadata table of Table 1 is shown in the following Table 2.

**Table 2**

| User ID | Time | APP usage |
|---------|------|-----------|
| ID1 | 8 | Taobao |
| ID1 | 10 | Yahoo |
| ID1 | 11 | Baidu |
| ID1 | 15 | Sina |
| ID2 | 8 | Taobao |
| ID2 | 9 | Taobao |
| ID2 | 10 | Yahoo |
| ID2 | 11 | Baidu |
| ID3 | 8 | Taobao |
| ... | ... | ... |
| IDn | 23 | Tmall |

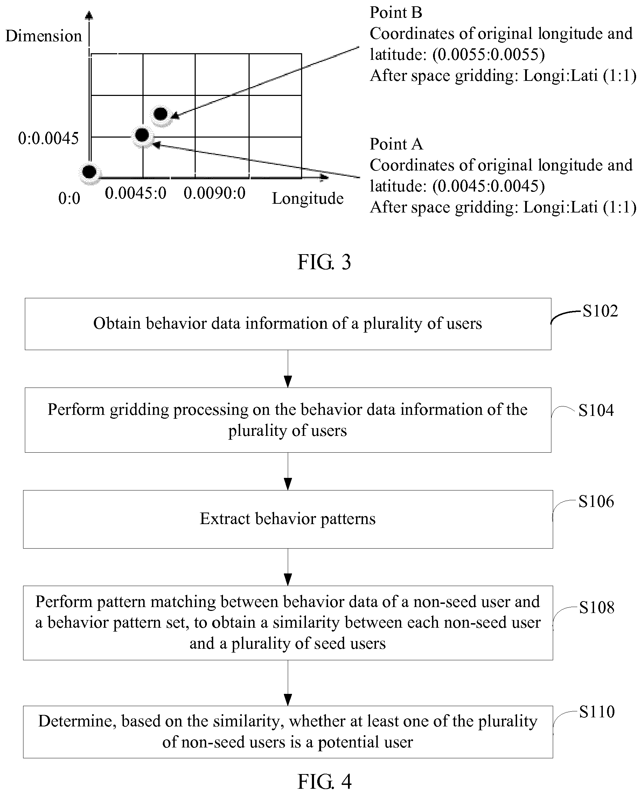

Space gridding processing is specifically: dividing a two-dimensional location space into grid blocks based on longitude and latitude information. For example, geographic space is divided into several grids with a side length of 500 meters, and a location of a user at any time point can be located in one of the grids. As shown in FIG. 3, in an implementation of the embodiment, longitude and latitude 0:0 represent an origin of coordinates. A distance of 500 meters is corresponding to 0.0045 degree of a step (step1) of change in longitude, and similarly is corresponding to 0.0045 degree of a step (step2) of change in latitude.

Each grid can be obtained by using the following formula:

$$\text{Longi=Math.floor (longitude/step1) rounding down for longitude conversion,}$$

and

$$\text{Lati=Math.floor (latitude/step2) rounding down for latitude conversion.}$$

According to FIG. 3, for every 500 meters extended rightwards, the longitude increases by 0.0045, and for every 500 meters extended upwards, the latitude increases by 0.0045. For a point A in the grid, it is assumed that original longitude and latitude coordinates of the point A are 0.0045:0.0045. According to the longitude and latitude conversion formulas: Longi=Math.floor (0.0045/0.0045) rounding down and Lati=Math.floor (0.0045/0.0045) rounding down, converted coordinates after gridding are 1:1. For another point B in the grid, original longitude and latitude coordinates of the point B are 0.0055:0.0055. According to the longitude and latitude conversion formulas: Longi=floor (0.0055/0.0045) rounding down and Lati=floor (0.0055/0.0045) rounding down, converted coordinates after gridding are also 1:1. It can be learned through gridding that the point A and point B are located in a same grid represented by 1:1.

Therefore, any point whose longitude and latitude coordinates are 120.20XX:30.06XX can be mapped, through gridding conversion, onto a grid represented by Longi:Lati (23XXX:67XX) obtained by using floor (120.20XX/0.0045)=23XXX and floor (30.06XX/0.0045)=67XX.

Mapped behavior data information shown in the following Table 3 is obtained after the time and space gridding processing is performed on the basis metadata table of Table 1.

**Table 3 Mapped behavior data information**

| User ID | Time | Location | APP usage |
|---------|------|----------|-----------|
| ID1 | 8 | 23XXX: 67XX | Taobao |
| ID1 | 10 | 23XXX: 67XX | Yahoo |
| ID1 | 11 | 23XXX: 67XX | Baidu |
| ID1 | 15 | 23XXX: 67XX | Sina |
| ID2 | 8 | 23XXX: 67XX | Taobao |
| ID2 | 9 | 23XXX: 67XX | Taobao |
| ID2 | 10 | 23XXX: 67XX | Yahoo |
| ID2 | 11 | 23XXX: 67XX | Baidu |
| ID3 | 8 | 23XXX: 67XX | Taobao |
| ... | ... | ... | ... |
| IDn | 23 | 23XXX: 67XX | Tmall |

The pattern extracting unit 203 extracts a pattern from behavior data of seed users (it is assumed that a quantity of seed users is 500) in the mapped behavior data information, to obtain a set of behavior patterns sorted based on a frequency or a quantity of users, as shown in the following Table 4.

**Table 4 Behavior pattern set table**

| Pattern number | Behavior pattern | Quantity of users |
|----------------|------------------|-------------------|
| Pattern 1 | 8 Taobao, 10 Yahoo | 209 |
| Pattern 2 | 8 Taobao, 11 Baidu | 189 |
| Pattern 3 | 8 Taobao, 10 Yahoo, 15 Sina | 80 |
| Pattern 4 | 10 Location A, 11 Baidu | 50 |
| Pattern 5 | 8 Location A Taobao | 30 |
| ... | ... | ... |
| Pattern n | 6 Location A Sina, 8 Location B Yahoo | 2 |

Meaning of the pattern 1: a quantity of users who have a behavior pattern of using Taobao at a time segment 8 and using Yahoo at a time segment 10 is 209; and meaning of the Pattern 2: a quantity of users who have a behavior pattern of using Taobao at a time segment 8 and using Baidu at a time segment 10 is 189. Each behavior pattern represents a behavior characteristic of the seed user, and the behavior characteristic is a behavior habit of the seed user.

The pattern matching unit 204 is configured to perform pattern matching between behavior data of each non-seed user and the behavior pattern set, and a matching result is as follows:

the user 1 matches behavior patterns 1, 2, 3, 4, and 5;
the user 2 matches behavior patterns 1, 2, and 4; and
the user 3 matches behavior pattern 5.

Then, a similarity between non-seed users and the seed users is calculated in a fused weight manner:

a score of the user 1 is: (209+189+80+50+30)/500=1.116 (there are 500 seed users);
a score of the user 2 is: (209+189+50)/500=0.896; and

a score of the user 3 is: 30/500=0.06.

The determining unit 205 sorts the non-seed users based on similarity scores of the non-seed users. A higher score indicates that a behavior pattern of a non-seed user is closer to that of the seed users, and there is a higher rate of successfully promoting new services, and the non-seed user is deemed as a potential user.

The sending unit 206 provides a list of potential users for the marketing platform 30, so that the marketing platform 30 promotes the new services based on the list of potential users.

As shown in FIG. 4, a user increasing method in this embodiment of the present invention includes the following steps.

S102: A data mining and analysis device obtains behavior data information of a plurality of users from a storage device, where the plurality of users include a plurality of seed users and a plurality of non-seed users, and the behavior data information specifically includes one of the following three cases:

a user behavior and a time of the behavior;
a user behavior and a location of the behavior; and
a user behavior and related time and location information of the behavior.

A form and content of the behavior data information is the same as those of Table 1 in the foregoing embodiment, and details are not described herein again.

S104: The data mining and analysis device performs gridding processing on the behavior data information of the plurality of users, to convert the behavior data information to mapped behavior data information. The gridding processing is to grid the behavior data information, and to map the user behavior data onto a corresponding time segment and corresponding space or a corresponding time segment, or corresponding space . Specifically, a time dimension is segmented along a time axis, to map the user behavior data onto a corresponding time segment; and/or a two-dimensional location space is divided into grid blocks based on longitude and latitude, to map the user behavior data onto a corresponding grid.

A form and content of the mapped behavior data information is the same as those of Table 3 in the foregoing embodiment, and details are not described herein again.

S106: The data mining and analysis device extracts behavior patterns from mapped behavior data information of the plurality of seed users among the plurality of users, to obtain a behavior pattern set of the plurality of seed users.

Specifically, pattern mining is performed on the behavior data of the seed users by using an association rule algorithm Prefixspan, to obtain a set of behavior patterns sorted based on a frequency or a quantity of users, as shown in Table 4 in the foregoing embodiment. Details are not described herein again. The behavior pattern set includes a plurality of behavior patterns, each behavior pattern represents a behavior characteristic of the seed user, and the behavior characteristic is a behavior habit of the seed user, to be specific, when and where a behavior of the seed user occurs, or when a behavior of the seed user occurs, or where a behavior of the seed user occurs.

S108: The data mining and analysis device performs pattern matching between behavior data of each non-seed user and the behavior pattern set of the plurality of seed users by using the behavior pattern set, to obtain a similarity between each non-seed user and the plurality of seed users.

Specifically, matching is performed between the behavior data of each non-seed user and the behavior pattern set of the seed users; and if one non-seed user matches a plurality of time/space patterns, a matching result is obtained through sampling fusion of weights. A method for calculating a fused weight is the same as that in the foregoing embodiment, and details are not described herein again.

S110: The data mining and analysis device determines, based on the similarity, whether the non-seed users are potential users. For example, there are a total of 500 non-seed users. If 100 users need to be selected from the 500 users as potential users, the 500 non-seed users may be sorted in descending order of similarity scores. It is considered that top 100 non-seed users have a similar time/space behavior pattern as the seed users and the top 100 non-seed users are determined as the potential users.

Compared with the prior art, in the present invention, time and space, or time, or space behavior data of the seed users is analyzed, to obtain a common rule and extract a behavior pattern set of the seed users. Then, matching is performed between the behavior data of each non-seed user and the behavior pattern set of the seed users, and similarity scores are obtained based on the matching result to determine whether the non-seed users are potential users. In this way, the telecommunications operator can more accurately identify the potential users, improving development efficiency of new services.

In the several embodiments provided in this application, the disclosed apparatus and method may be implemented in other manners. For example, the unit division is merely logical function division and may be another division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electrical, mechanical, or other forms.

In addition, functional units in the embodiments of the present invention may be integrated into one processing unit, or each of the units may exist alone physically, or two or more units are integrated into one unit.

An embodiment of the present invention further provides a computer program product and a storage medium storing the computer program product. The computer program product includes program code stored in a computer readable medium, and the program code is loaded by the processor to implement the foregoing method. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1.  A user increasing method, comprising:

    obtaining behavior data information of a plurality of users, wherein the behavior data information comprises related time and space information of a user behavior, or related time of a user behavior, or space information of a user behavior;
    performing gridding processing on the behavior data information of the plurality of users, to convert the behavior data information to mapped behavior data information;
    extracting behavior patterns from mapped behavior data information of a plurality of seed users among the plurality of users, to obtain a behavior pattern set of the plurality of seed users;
    performing pattern matching between behavior data of each non-seed user and the behavior pattern set, to obtain a similarity between each non-seed user and the plurality of seed users; and
    determining, based on the similarity, whether at least one of the plurality of non-seed users is a potential user.

2.  The method according to claim 1, wherein the gridding processing specifically comprises: gridding the behavior data information, to map user behavior data onto a corresponding time segment and a corresponding space, or a corresponding time segment, or a corresponding space .

3.  The method according to claim 2, wherein the gridding processing is specifically:

    segmenting a time dimension along a time axis, to map the user behavior data onto a corresponding time segment; and dividing a two-dimensional location space into grid blocks based on longitude and latitude, to map the user behavior data onto a corresponding grid;
    or
    segmenting a time dimension along a time axis, to map the user behavior data onto a corresponding time segment;
    or dividing a two-dimensional location space into grid blocks based on longitude and latitude, to map the user behavior data onto a corresponding grid.

4.  The method according to any one of claims 1 to 3, wherein the step of extracting behavior patterns from mapped behavior data information of a plurality of seed users among the plurality of users, to obtain a behavior pattern set of the plurality of seed users is specifically:
    performing pattern mining on the behavior data of the seed users by using an association rule algorithm Prefixspan, to obtain a set of behavior patterns sorted based on a frequency or a quantity of users.

5.  The method according to any one of claims 1 to 4, wherein the behavior pattern set comprises a plurality of behavior patterns, each behavior pattern represents a behavior characteristic of the seed user, and the behavior characteristic is a behavior habit of the seed user, to be specific, when and where a behavior of the seed user occurs, or when a behavior of the seed user occurs, or where a behavior of the seed user occurs.

**6.** The method according to any one of claims 1 to 5, wherein the step of performing pattern matching between behavior data of each non-seed user and the behavior pattern set is specifically:

performing matching between the behavior data of each non-seed user and the behavior pattern set of the seed users; and
if one non-seed user matches a plurality of behavior patterns, obtaining a matching result through fusion of weights.

**7.** The method according to any one of claims 1 to 6, wherein the determining, based on the similarity, whether at least one of the plurality of non-seed users is a potential user is specifically:
sorting the plurality of non-seed users based on similarity scores of the plurality of non-seed users, wherein a higher score indicates that a behavior pattern of a non-seed user is closer to that of the seed users.

**8.** A data mining and analysis device, comprising:

a receiving unit, configured to obtain behavior data information of a plurality of users, wherein the behavior data information comprises related time and space information of a user behavior, or related time of a user behavior, or space information of a user behavior;
a mapping unit, configured to perform gridding processing on the behavior data information of the plurality of users, to convert the behavior data information to mapped behavior data information;
a pattern extracting unit, configured to extract behavior patterns from mapped behavior data information of a plurality of seed users among the plurality of users, to obtain a behavior pattern set of the plurality of seed users;
a pattern matching unit, configured to perform pattern matching between behavior data of each non-seed user and the behavior pattern set, to obtain a similarity between each non-seed user and the plurality of seed users;
a determining unit, configured to determine, based on the similarity, whether at least one of the plurality of non-seed users is a potential user; and
a sending unit, configured to send information of the potential user to a marketing platform.

**9.** The device according to claim 8, wherein the gridding processing specifically comprises:

segmenting a time dimension along a time axis, to map the user behavior data onto a corresponding time segment; and dividing a two-dimensional location space into grid blocks based on longitude and latitude, to map the user behavior data onto a corresponding grid;
or
segmenting a time dimension along a time axis, to map the user behavior data onto a corresponding time segment;
or
dividing a two-dimensional location space into grid blocks based on longitude and latitude, to map the user behavior data onto a corresponding grid.

**10.** The device according to claim 8, wherein the pattern extracting unit is specifically configured to: perform pattern mining on the behavior data of the seed users by using an association rule algorithm Prefixspan, to obtain a set of behavior patterns sorted based on a frequency or a quantity of users.

**11.** The device according to claim 8, wherein the behavior pattern set comprises a plurality of behavior patterns, each behavior pattern represents a behavior characteristic of the seed user, and the behavior characteristic is a behavior habit of the seed user, to be specific, when and where a behavior of the seed user occurs, or when a behavior of the seed user occurs, or where a behavior of the seed user occurs.

**12.** The device according to claim 8, wherein the pattern matching unit is specifically configured to: perform matching between the behavior data of each non-seed user and the behavior pattern set of the seed users; and if one non-seed user matches a plurality of behavior patterns, obtain a matching result through fusion of weights.

**13.** The device according to claim 8, wherein the determining unit is specifically configured to:
sort the plurality of non-seed users based on similarity scores of the plurality of non-seed users, wherein a higher score indicates that a behavior pattern of a non-seed user is closer to that of the seed users.

**14.** A user increasing system, comprising:

a storage device, configured to store behavior data information of a plurality of users, wherein the behavior data information comprises related time and space information of a user behavior, or related time of a user behavior, or space information of a user behavior;

the device according to any one of claims 8 to 13; and

a marketing platform, configured to launch a promotional service to potential users based on a determining result of the data mining and analysis device.

15. A computer readable medium, wherein the computer readable medium stores an executable instruction, and the executable instruction is used to perform the method according to any one of claims 1 to 7.

10

Storage
device

20

Data
mining and
analysis
device

30

Marketing
platform

40

User 1

User 2

User 3

User 4

User 5

FIG. 1

20

Data mining and analysis device

Receiving unit 201

Mapping unit 202

Pattern extracting unit 203

Pattern matching unit 204

Determining unit 205

Sending unit 206

FIG. 2

Dimension

Point B
Coordinates of original longitude and
latitude: (0.0055:0.0055)
After space gridding: Longi:Lati (1:1)

0:0.0045

Point A
Coordinates of original longitude and
latitude: (0.0045:0.0045)
After space gridding: Longi:Lati (1:1)

0:0    0.0045:0    0.0090:0    Longitude

FIG. 3

Obtain behavior data information of a plurality of users — S102

Perform gridding processing on the behavior data information of the plurality of users — S104

Extract behavior patterns — S106

Perform pattern matching between behavior data of a non-seed user and a behavior pattern set, to obtain a similarity between each non-seed user and a plurality of seed users — S108

Determine, based on the similarity, whether at least one of the plurality of non-seed users is a potential user — S110

FIG. 4

# INTERNATIONAL SEARCH REPORT

International application No.

PCT/CN2017/104079

## A. CLASSIFICATION OF SUBJECT MATTER

G06Q 30/02 (2012.01) i; G06F 17/27 (2006.01) i
According to International Patent Classification (IPC) or to both national classification and IPC

## B. FIELDS SEARCHED

Minimum documentation searched (classification system followed by classification symbols)

G06Q, G06F, G06K

Documentation searched other than minimum documentation to the extent that such documents are included in the fields searched

Electronic data base consulted during the international search (name of data base and, where practicable, search terms used)

CNKI, CNPAT, WPI, EPODOC: 种子, 用户, 客户, 潜在, 扩展, 动作, 属性, 行为, 栅格化, 时间, 片, 段, 地理, 空间, 位置, 相似, 类似, 相关, 相同, 同类, 共同, seed?, lead?, like?lihood, look?alik+, similar+, common+, behavior, action+, attribute, time, piece?, slice?, segment?, divid+, posit+, locat+, spac+, la- ten+, potent+, user?, client

## C. DOCUMENTS CONSIDERED TO BE RELEVANT

| Category* | Citation of document, with indication, where appropriate, of the relevant passages | Relevant to claim No. |
|---|---|---|
| A | 仲兆满 等. "微博中特定用户的相似用户发现方法", 计算机学报, 39(4), 30 April 2016 (30.04.2016), the abstract, 3.2-3.6, and 4.2-4.3, and pages 768-774, (ZHONG, Zhaoman et al., "Discovering Similar Users for Specific User on Microblog", Chinese Journal of Computers) | 1-15 |
| A | CN 105260414 A (ADMASTER INC.), 20 January 2016 (20.01.2016), entire document | 1-15 |
| A | CN 104751354 A (HEYI INFORMATION TECHNOLOGY (BEIJING) CO., LTD.), 01 July 2015 (01.07.2015), entire document | 1-15 |
| A | CN 104598557 A (HUAWEI TECHNOLOGIES CO., LTD.), 06 May 2015 (06.05.2015), entire document | 1-15 |
| A | CN 105550903 A (TENCENT TECHNOLOGY (SHENZHEN) CO., LTD.), 04 May 2016 (04.05.2016), entire document | 1-15 |
| A | US 2012054040 A1 (BAGHERJEIRAN, A. et al.), 01 March 2012 (01.03.2012), entire document | 1-15 |

☒ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 27 November 2017 | 28 December 2017 |

| Name and mailing address of the ISA | Authorized officer |
|---|---|
| State Intellectual Property Office of the P. R. China<br>No. 6, Xitucheng Road, Jimenqiao<br>Haidian District, Beijing 100088, China<br>Facsimile No. (86-10) 62019451 | QI, Ying<br><br>Telephone No. (86-10) 62413233 |

Form PCT/ISA/210 (second sheet) (July 2009)

## INTERNATIONAL SEARCH REPORT

| International application No. |
| --- |
| PCT/CN2017/104079 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | WO 2012034105 A2 (TURNKEY INTELLIGENCE LLC et al.), 15 March 2012 (15.03.2012), entire document | 1-15 |

Form PCT/ISA/210 (continuation of second sheet) (July 2009)

## INTERNATIONAL SEARCH REPORT
### Information on patent family members

| | International application No. |
|---|---|
| | PCT/CN2017/104079 |

| Patent Documents referred in the Report | Publication Date | Patent Family | Publication Date |
|---|---|---|---|
| CN 105260414 A | 20 January 2016 | None | |
| CN 104751354 A | 01 July 2015 | None | |
| CN 104598557 A | 06 May 2015 | WO 2016110121 A1 | 14 July 2016 |
| CN 105550903 A | 04 May 2016 | None | |
| US 2012054040 A1 | 01 March 2012 | None | |
| WO 2012034105 A2 | 15 March 2012 | US 2012072264 A1 | 22 March 2012 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201611194189